# EUROPEAN PATENT APPLICATION

(11) **EP 0 665 038 A1**
(43) Date of publication of application: **02.08.1995**
(21) Application number: 94309834.3
(22) Date of filing: 28.12.1994
(51) Int. Cl.: A63F 9/22

(54) **Memory cartridge**

(30) Priority: 29.12.1993 GB 9326533; 29.04.1994 US 235805
(71) Applicant: CODEMASTERS LIMITED, Southam, Warwickshire CV33 0DL (GB)
(72) Inventor: Darling, David, Barford Warwickshire, CV35 8DD (GB)
(74) Representative: Bibby, William Mark

(57) **Abstract**

A memory cartridge includes memory storing at least one program to be executed by the microprocessor in a system such as a video game system. The memory cartridge has at least one input/outport port on it to establish a connection with a peripheral control device such as a joystick. Electrical circuitry within the memory cartridge connects the at least one port to the system when the memory cartridge is received by the system. When a peripheral control device establishes a connection with the at least one port, more peripheral control devices can interface with the program stored in the memory cartridge than would normally be permitted by the system alone and without requiring a separate adapter.

## Description

The present invention relates to cartridges and in particular to a removable memory cartridge for use in a system adapted to execute one or more of the programs stored in the memory cartridge.

### BACKGROUND OF THE INVENTION

Systems to receive removable memory cartridges and execute the programs stored therein are well known. An example of such systems are video game systems which can be found in most households throughout Europe and North America. These video game systems include the type designed to be connected to the television in the household and the portable type having their own display. Common video game systems designed to be connected to the television are those manufactured by Nintendo® under the name Nintendo Entertainment System® or NES® and by Sega® under the name Sega Genesis/Megadrive®. Common portable type systems are also manufactured by Nintendo® and Sega® under the names Gameboy® and Game Gear® respectively. Other types of systems such as Jaguar® manufactured by Atari® and 3DO multimedia machines are also able to execute game programs stored on removable memory media.

The Sega Genesis/Megadrive® video game system manufactured by Sega® referred to above includes a game console to be connected to a television in the household. The game console includes a slot to receive removable, memory cartridges which store game programs to be executed by the microprocessor in the game console. Typical memory cartridges for use in these video game systems are designed to allow up to two players to play the game programs when executed by the microprocessor.

The Sega® game console includes a microprocessor, a graphics processor and a security system. The security system examines the memory cartridge received by the game console to determine whether the memory cartridge is authentic and is designed to prevent the microprocessor in the game console from executing game programs stored in unauthorized memory cartridges. In addition, the game console includes a pair of ports to which are connected peripheral control devices such as joypads. The microprocessor reads from the ports during execution of a game program by the microprocessor to allow the players to play the game program.

To permit more than two players to play a game program, an adapter and memory cartridges having programs stored therein designed for more than two players are available. The adapter includes a connector which is received in a port on the game console and one or more ports to receive additional peripheral control devices. These additional peripheral control devices and those which are included with the game console allow more than two players to play the game programs stored in the memory cartridges when executed by the microprocessor. Unfortunately, the adapters are expensive and only a limited number of game console owners posses them.

Thus, there exists the need for a more readily accessible way to allow more than two peripheral control devices to interface with programs stored in memory cartridges designed for use in systems such as those referred to above. It is therefore an object of the present invention to obviate or mitigate the above disadvantage.

### SUMMARY OF THE INVENTION

According to one aspect of the present invention there is provided a memory cartridge to be removably received by a system adapted to execute one or more programs stored in said memory cartridge, said memory cartridge comprising:
memory storing at least one program to be executed by said system;
at least one port to communicate with a peripheral control device; and
means to connect said port to said system when said memory cartridge is received by said system whereby said at least one port allows at least one additional peripheral control device to interface with said at least one program when executed by said system than is permitted by said system alone.

In one embodiment, the memory cartridge includes at least two ports adapted to receive peripheral control devices in the form of joystick or joypad controllers. The ports in one form, each include a connector to connect physically and electrically the peripheral control devices to the memory cartridge.

Preferably, the ports are assigned at least one address of the memory with the memory cartridge also including means to detect the at least one address when received from the system and enable the appropriate port. In one embodiment, each port is assigned a separate address with the means to detect the addresses enabling the port associated with the address received thereby. In this embodiment, it is also preferred that the addresses are consecutive and that the least significant bit of the address is used by the detection and enable means to select the port to be enabled when one of the addresses is detected.

To achieve this, in one embodiment, the detection and enable means includes an address decoder to detect the addresses, a logic circuit receiving the output of the address decoder and the least significant bit of the address received from the system, and a buffer associated with the ports, the buffers being selectively enabled by the output of the logic circuit. In another embodiment, both ports are assigned the same address location in the memory with the first port being assigned the low byte of the memory location and the second port being assigned the high byte of that same memory location. However, there are many other ways of the system enabling a specific port, not necessarily using memory mapped addressing, including the use of other system output lines that may be available including the data bus and other control lines.

In another aspect of the present invention there is provided in combination, a memory cartridge to be removably received by a system adapted to execute one or more programs stored in said memory cartridge, said memory cartridge including memory storing at least one program to be executed by said system; at least one port to communicate with a peripheral control device; and means to connect said port to said system when said memory cartridge is received by said system; and
a peripheral control device in communication with said at least one port to interface with said at least one program when executed by said system.

In yet another aspect of the present invention there is provided in combination, a system including processing means to execute one or more programs stored in a memory cartridge; and a memory cartridge including memory storing at least one program to be executed by said system; at least one port to communicate with a peripheral control device; and means to connect said port to said system when said memory cartridge is received by said system whereby said at least one port allows at least one additional peripheral control device to interface with said at least one program when executed by said system than is permitted by said system alone.

The present invention provides advantages in that more peripheral control devices can interface with the programs stored in the memory cartridge than would be possible with the system alone and without the need to purchase a separate and expensive adapter. This allows more individuals to interface with a program stored in the memory cartridge than is typically possible with the system alone or allows an individual to interface with a program stored in the memory cartridge using more peripheral control devices than is typically possible with the system alone.

### BRIEF DESCRIPTION OF THE DRAWINGS

Embodiments of the present invention will now be described more fully with reference to the accompanying drawings in which:
Figure 1 is a perspective view of a memory cartridge;
Figure 2 is an exploded perspective view of a portion of the memory cartridge illustrated in Figure 1;
Figure 3 is a schematic diagram of the memory cartridge illustrated in Figure 1;
Figure 4 is a memory map of memory forming part of a memory cartridge and video game system combination;
Figure 5a is a perspective view of another embodiment of a memory cartridge; and
Figure 5b is a schematic diagram of the memory cartridge illustrated in Figure 5a.

### DESCRIPTION OF THE PREFERRED EMBODIMENTS

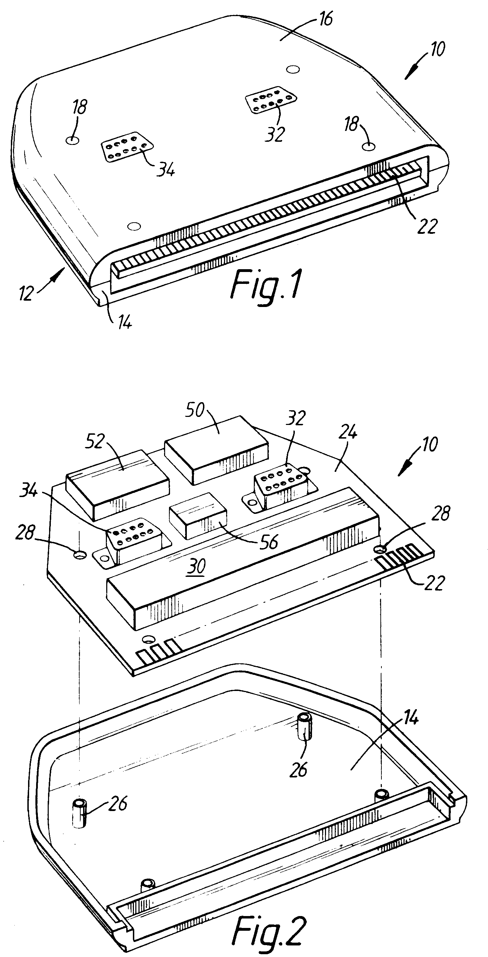

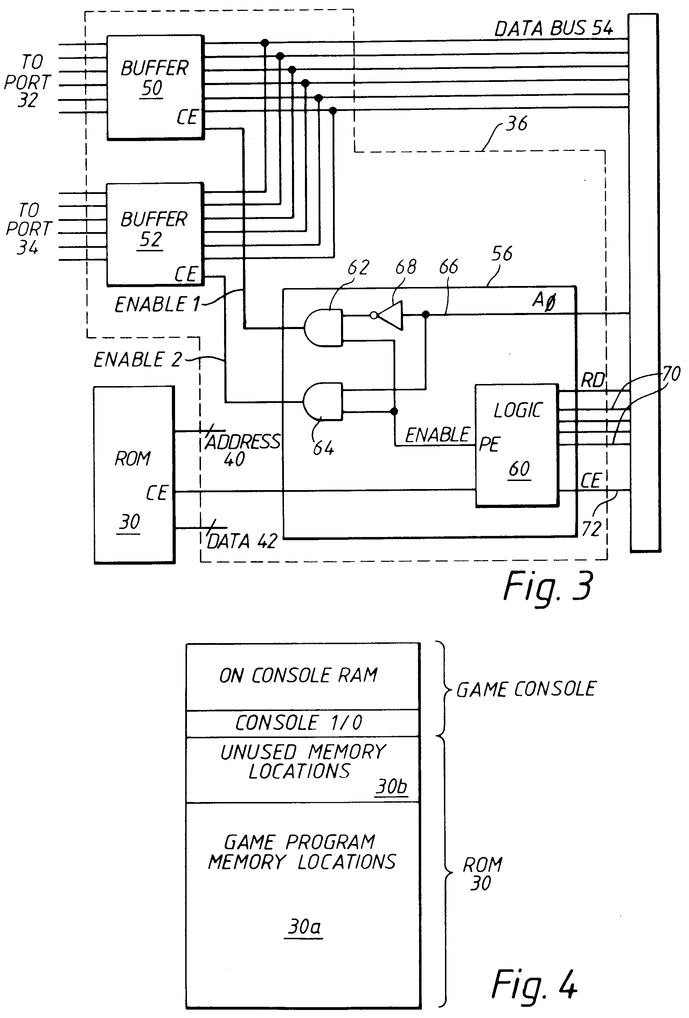

Referring now to Figures 1 and 2, a memory cartridge is shown and is generally indicated by reference numeral 10. The memory cartridge is designed to be removably received by a system adapted to execute one or more programs stored in the memory cartridge 10. Such systems may be of the video game system type to be connected to a television, the portable type video game systems, 3DO multimedia machines or other types of systems designed to execute programs stored on removable memory media and allow peripheral control devices to interface with the programs when executed. The programs stored in the memory cartridge may be game programs, educational programs and the like designed for interaction with at least one peripheral control device.

In this particular example, the memory cartridge 10 stores game programs and is designed to be received in the game console of a video game system to be connected to a television such as the Nintendo® and Sega® systems referred to previously. The video game system includes two controllers in the form of joypads connected to the game console to allow an individual to interface with the game program being executed by the game console.

The memory cartridge 10 includes a casing 12 having a lower part 14 and an upper part 16 held together by suitable fasteners 18 passing through the parts 14 and 16 at a number of locations. The front of the casing 12 is open to expose an edge connector 22. The edge connector 22 mates with a complimentary connector in the game console when the memory cartridge 10 is inserted into the game console to connect electrically and physically the memory cartridge and the game console.

Within the casing 12 is a printed circuit board 24. The printed circuit board 24 is supported by upstanding projections 26 on the lower part 14. Apertures 28 are provided through the projections 26 and the printed circuit board 24 to accommodate the fasteners 18. The front of the printed circuit board passes through an opening in the casing 12 and is exposed to constitute the edge connector 22. On the printed circuit board 24 is a memory 30 storing in some of its memory locations 30a at least one game program to be executed by the microprocessor in the game console. However, not all memory locations of the memory 30 store game program data so that some memory locations 30b of the memory 30 are unused (see Figure 4). In this particular example, the memory is read only memory (ROM) although other forms of memory such as EPROM are acceptable.

A pair of input/output ports 32 and 34 respectively, in this case, D-type pin connectors, are also on the printed circuit board 24 and are exposed through openings in the upper part 16 of the casing 12 to permit peripheral control devices such as joysticks or joypads to be connected physically and electrically to the memory cartridge 10. Associated with the ports 32 and 34 is a port control circuit 36 (best seen in Figure 3) which is also on the printed circuit board 24.

Referring now to Figures 2 and 3, the electrical circuitry on the printed circuit board 24 is better illustrated. As can be seen, the ROM 30 is connected to both an address bus 40 and a data bus 42 which lead to the respective address and data busses of the game console when the memory cartridge 10 is received by the game console. The chip enable pin CE of the ROM 30 is connected to the port control circuit 36.

The port control circuit 36 includes a buffer 50 associated with port 32 and a buffer 52 associated with port 34. Each buffer 50 and 52 respectively is connected to a common data bus 54 which leads to the data bus of the game console when the memory cartridge 10 is received by the game console. The enable pin CE of each buffer 50 and 52 respectively is connected to an address logic circuit 56. The address logic circuit 56 includes an address decoder 60 having its port enable pin PE connected to one input pin of a pair. of AND gates 62 and 64 respectively. The other output pin of the address decoder 60 leads to the chip enable pin CE of the ROM 30. The other input pin of AND gate 62 is connected to a line 66 via an inverter 68. The line 66 leads to the first address line A₀ of the game console's address bus when the memory cartridge 10 is received by the game console. The other input pin of AND gate 64 is connected directly to line 66. This arrangement allows only one of the AND gates 62, 64 to provide a logic high output at a time. The output pin of AND gate 62 is connected to the enable pin CE of buffer 50 while the output pin of AND gate 64 is connected to the enable pin CE of buffer 52.

The address decoder 60 receives input from a partial address bus 70 which leads to part of the address bus of the game console when the memory cartridge 10 is received by the game console. The address decoder 60 also receives input from a chip enable line 72 and a read line RD leading to respective lines of the game console when the memory cartridge 10 is received by the game console. The address decoder 60 also contains logic to detect two specific port identifiers. In this particular example, the port identifiers are in the form of consecutive addresses received on the partial address bus 70. These consecutive addresses correspond to addresses of the ROM 30 associated with unused memory locations 30b. Each of these two consecutive addresses is assigned to one of the ports 32 and 34 so that one of the ports 32 is assigned an even address and one of the ports 34 is assigned an odd address. Thus, effectively, the buffers 52 and 54 are mapped into a portion of the memory map normally assigned to the memory 30 in the memory cartridge 10.

When one of the two consecutive addresses is detected by the address decoder 60 and a signal is received from the microprocessor in the game console on the read line RD, the logic therein removes the signal to the chip enable pin CE of the ROM 30 and asserts a logic high signal on its enable pin PE. This logic high in turn is conveyed to the AND gates 62 and 64 respectively. The game program data stored in the ROM 30 includes instructions to the microprocessor in the game console to read from these consecutive addresses when three or four players are selected to play the game program.

Although not shown, if the memory cartridge 10 is designed for use with a video game system having a security system, the memory cartridge will also include some means to allow the microprocessor in the game console to execute the program stored in the memory cartridge.

The operation of the memory cartridge will now be described. The memory cartridge 10 and game console function in a conventional manner with the exception that, unlike conventional memory cartridges made for these video game systems, up to four players may be selected to play the game program stored in the memory cartridge 10 at a time. If one or two players are selected to play the game program, the memory cartridge 10 and game console combination function in the conventional manner. In this case, the players use the controllers included with the game console to play the game program.

If three or four players are selected to play the game program stored in the memory cartridge, peripheral control devices such as joysticks or joypads should be connected to one or both of the ports 32 and 34 respectively depending on the number of players selected. If three players are selected, the game program data in the ROM 30 provides the address assigned to port 32 to the microprocessor so that the microprocessor reads from that address when it is necessary to read from the buffer 50 associated with that port. If four players are selected, the game program data in the ROM 30 provides the two consecutive addresses assigned to ports 32 and 34 to the microprocessor so that the microprocessor reads from those addresses when it is necessary to read from the buffers 50 and 52.

When player three is to play the game program, the microprocessor reads from the address (an even address) assigned to port 32, and transmits a signal to the read line RD. The address is received by the address decoder 60 via the partial address bus 70. When the logic in the address decoder 60 detects this address and the read line RD has been asserted, the address decoder 60 de-asserts the chip enable pin CE of the ROM 30 and asserts its port enable pin PE. The ROM 30 is disabled to prevent the contents stored in the ROM address corresponding to the address assigned to the port 32 from being read.

When the port enable pin PE of the address decoder 60 is asserted, each of the AND gates 62 and 64 receives a logic high on one of its inputs. The other input of the AND gate 62 which is connected to the line 66 via inverter 68 also receives a logic high due to the fact that all even addresses have a logic low least significant bit. The AND gate 62 therefore asserts the chip enable pin CE of the buffer 50 allowing the microprocessor in the game console to read its contents via the data bus 54. The other input pin of AND gate 64 receives a logic low to maintain the output of the AND gate 64 low preventing the buffer 52 associated with the port 34 from being enabled. Once the buffer 50 is enabled, movement of the peripheral control device in various directions will load the buffer 50 with different data values which can be read from the data bus 54 by the game console.

When the address decoder 60 receives the address assigned to the port 34 via the partial address bus 70 and its read line RD is asserted, the logic therein also de-asserts the chip enable pin CE of the ROM 30 and asserts its port enable pin PE. Again both AND gates 62 and 64 receive a logic high on one of their input pins. Because port 34 is assigned an odd address, the other input of AND gate 64 receives a logic high so that the AND gate 64 asserts the chip enable pin CE of buffer 52 allowing the microprocessor to read its contents via data bus 54. The other input pin of AND gate 62 receives a logic low due to the inverter 68 preventing the buffer 50 associated with port 32 from being enabled.

Although the memory cartridge has been described as having two ports 32 and 34 in the form of pin connectors, it should be apparent to those of skill in the art, that only one or three or more ports may be provided. In the case of three of more ports, additional logic is required to ensure that only the buffer associated with the address received by the address decoder is enabled. In addition, other types of ports may be used to communicate with the peripheral control devices. For example, the ports 32 and 34 may be in the form of receivers which communicate with the peripheral control devices via radio frequency (rf), infra-red, sonic or other optical communications.

Although the ports have been described as being assigned address values of the ROM that do not store game program data, it should be realized that the ports can be assigned any address value provided logic is included to discern between reads intended for the ports and those intended for other memory locations. It should also be realized that the ports can be assigned the same address location in the ROM with one of the ports be assigned the low byte of the address and the other port being assigned the high byte of the same address.

In addition, other ways of allowing the system to access data from ports 32 and 34 may be used. For example, other output lines from the system such as the data bus or control lines may be used for port initiation. In the case of the data bus, each port can be assigned an identifier in the form of a sequence of data bits occurring over the data bus, with the memory cartridge 10 enabling the ports when the sequences of data bits occur. Alternatively, the ports may be assigned identifiers in the form of one or more changes of state on a control line, with the memory cartridge 10 enabling the ports when the identifiers are received. It should also be realized that an optical Link between the ports and the system may be used to replace the electrical connection.

Moreover, although the memory cartridge is shown as having buffers connected to the ports and the data bus, it should be apparent to those of skill in the art that the memory cartridge may include other input/output circuitry to permit different types of peripheral control devices to interface with the system such as for example, proportional type joysticks and the like.

Also, although the memory cartridge 10 has been described as having memory storing a game program designed to allow more than two players interface with the game program, it should be realized that other types of programs may be stored in the memory cartridge. For example, the program may be designed to permit an individual to select the number and types of peripheral control devices to be used during program execution. If more than two peripheral control devices are selected, the ports on the memory cartridge can be used to accommodate these peripheral control devices.

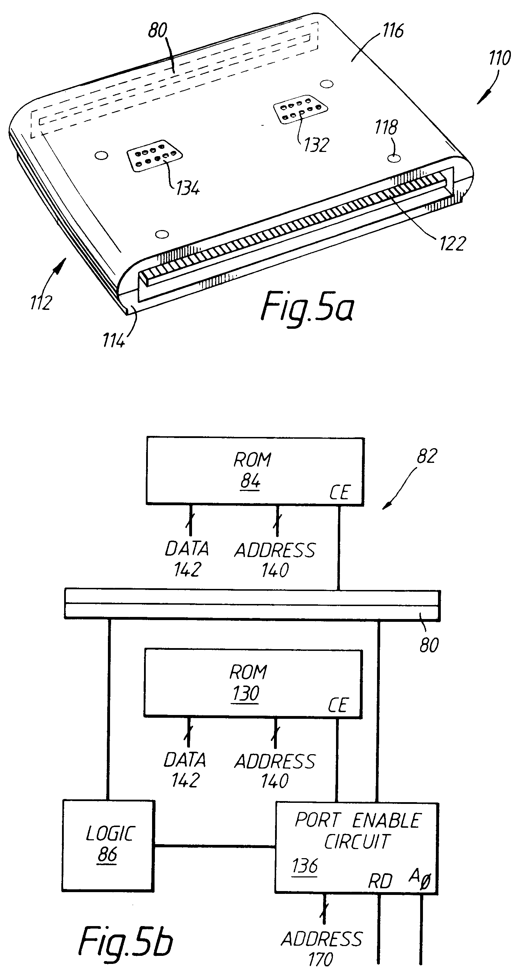

Referring now to Figures 5a and 5b, an alternative embodiment of a memory cartridge is shown as is indicated by reference numeral 110. In this embodiment, like reference numerals will be used to indicate like components with a "100" added for clarity. The memory cartridge 110 is very similar to the previous embodiment. However, the memory cartridge includes a second connector 80 to receive another memory cartridge 82 having a program stored in ROM 84 therein designed to allow more than two players but which does not have any input/outport ports. Logic 86 within the memory cartridge 110 detects when another memory cartridge 82 is received by connector 80. The logic 86 communicates with the port enable circuit 136 which in turn disables ROM 30 while enabling the ROM 84 in the memory cartridge 82 so that the program in the memory cartridge 82 is executed by the video game system. Therefore, the ports on the memory cartridge 110 can be used to allow individuals to interface with the programs stored in the memory cartridge 82 received by connector 80. Therefore, in this embodiment, only one memory cartridge 110 having the ports and circuitry to accommodate the input/outport ports needs to be purchased. Once one such cartridge has been purchased, other memory cartridges without the extra hardware but having programs designed for more than two players can be used with memory cartridge 110.

The present invention therefore allows additional individuals to interface with the programs stored in the memory cartridge than is typically permitted due to system hardware constraints and without requiring the need for a separate and expensive adapter by providing ports on the memory cartridges designed to communicate with peripheral control devices.

## Claims

1. A memory cartridge to be removably received by a system adapted to execute one or more programs stored in said memory cartridge, said memory cartridge comprising:
memory storing at least one program to be executed by said system;
at least one port to communicate with a peripheral control device; and
means to connect said port to said system when said memory cartridge is received by said system whereby said at least one port allows at least one additional peripheral control device to interface with said at least one program when executed by said system than is permitted by said system alone.

2. A memory cartridge as defined in claim 1 including at least two ports.

3. A memory cartridge as defined in claim 2 wherein said ports are adapted to receive peripheral control devices in the form of joystick joypad controllers.

4. A memory cartridge as defined in claim 3 wherein said ports include a connector to connect physically and electrically said peripheral control devices to said memory cartridge.

5. A memory cartridge as defined in claim 3 wherein said ports include a receiver to receive data transmitted from said peripheral control devices.

6. A memory cartridge as defined in claim 5 wherein said data is transmitted via radio frequency, infra-red, sonic or other optical communications.

7. A memory cartridge as defined in claim 1 said at least one port is assigned an identifier, said memory cartridge further including means to detect said identifier when received from said system.

8. A memory cartridge as defined in claim 2 wherein each of said at ports is assigned an identifier, said memory cartridge further including means to detect said identifier when received from said system.

9. A memory cartridge as defined in claim 8 wherein said identifier is in the form of an address assigned to said ports.

10. A memory cartridge as defined in claim 9 wherein each port is assigned a separate address.

11. A memory cartridge as defined in claim 10 wherein said addresses are consecutive and wherein the least significant bit of the address is used by said detection and enable means to select the port to be enabled when one of said addresses is detected.

12. A memory cartridge as defined in claim 11 wherein said detection and enable means includes an address decoder to detect the addresses, a logic circuit receiving the output of the address decoder and the least significant bit of the address received from said system, and at least one buffer associated with said ports, said buffer being selectively enabled by the output of said logic circuit.

13. A memory cartridge as defined in claim 9 wherein one port is assigned the low byte of said address and the other port is assigned the high byte of said address.

14. A memory cartridge as defined in claim 9 wherein said identifier is in the form of sequences of data occurring on the data bus of said system.

15. A memory cartridge as defined in claim 9 wherein said identifier is in the form of predetermined changes of state occurring on one or more control lines of said system.

16. A memory cartridge as defined in claim 8 including a buffer associated with each individual port.

17. A memory cartridge as defined in claim 9 wherein said detection and enable means disables said memory when one of said ports is enabled.

18. A memory cartridge as defined in claim 2 wherein said ports are adapted to receive peripheral control devices in the form of joystick or joypad controllers.

19. A memory catridge as defined in claim 2 wherein said ports include a connector to connect physically and electrically said peripheral control devices to said memory cartridge.

20. A memory cartridge as defined in claim 10 wherein said ports are assigned addresses of said memory which do not store game program data.

21. A memory cartridge as defined in claim 13 wherein said ports are assigned an address of said memory which does not store game program data.

22. A memory cartridge as defined in claim 1 further including second connection means to receive another memory cartridge having second memory therein storing at least one program to be executed by said system and logic means to enable said second memory when said second connection means receives said other memory cartridge.

23. In combination, a memory cartridge to be removably received by a system adapted to execute one or more programs stored in said memory cartridge, said memory cartridge including memory storing at least one program to be executed by said system; at least one port to communicate with a peripheral control device; and means to connect said port to said system when said memory cartridge is received by said system; and
a peripheral control device in communication with said at least one port to interface with said at least one program when executed by said system.

24. The combination of claim 23 wherein said peripheral control device is removably attached to said at least one port.

25. The combination of claim 24 wherein said peripheral control device is in the form of a joystick controller.

26. In combination, a system including processing means to execute one or more programs stored in a memory cartridge; and a memory cartridge including memory storing at least one program to be executed by said system; at least one port to communicate with a peripheral control device; and means to connect said port to said system when said memory cartridge is received by said system whereby said at least one port allows at least one additional peripheral control device to interface with said at least one program when executed by said system than is permitted by said system alone.

27. The combination of claim 26 further including a peripheral control device in communication with said at least one port.

28. The combination of claim 27 wherein said peripheral control device is removably attached to said at least one port.
